# DEMANDE DE BREVET EUROPEEN

(11) **EP 1 041 296 A1**
(43) Date de publication de la demande: **04.10.2000**
(21) Numéro de dépôt: 00400771.2
(22) Date de dépôt: 20.03.2000
(51) Int. Cl.: F16B 9/02, F16C 1/26

(54) **Dispositif de fixation rapide d'une bague dans une échancrure d'une pièce support**

(30) Priorité: 31.03.1999 FR 9904123
(71) Demandeur: United Parts France SA, 74300 Cluses (FR)
(72) Inventeur: Rapin, Georges, 74300 Cluses (FR)
(74) Mandataire: Ramey, Daniel

(57) **Abrégé**

Dispositif de fixation rapide d'une bague dans une échancrure (12) d'une pièce support (10), ce dispositif comprenant une agrafe (20) en fil métallique, dont les extrémités repliées en U sont montées par encliquetage élastique dans des fentes (30) des bords opposés de l'échancrure (12), les extrémités libres (24) de l'agrafe s'étendant radialement en direction de l'axe de l'échancrure et formant des arcs-boutants s'appliquant sur la bague et s'opposant à son extraction.

L'invention s'applique notamment au montage des bagues d'arrêt de gaine des câbles coulissants, en particulier dans l'industrie automobile.

## Description

L'invention concerne un dispositif de fixation rapide d'une bague dans une échancrure d'une pièce support.

Des dispositifs de ce type sont utilisés dans de nombreux domaines pour la fixation des gaines de câbles coulissants et notamment dans l'industrie automobile, en particulier pour les arrêts de gaine des câbles de commande de vitesses.

Des bagues fixées sur les gaines par tout moyen approprié sont introduites dans des trous ou des échancrures des pièces support et y sont maintenues par divers moyens, qui sont plus ou moins coûteux et plus ou moins faciles à utiliser, notamment lorsque les trous ou échancrures des pièces support sont d'accès difficile.

On a par exemple déjà utilisé pour le blocage de ces bagues des systèmes vis-écrous, qui sont coûteux, parfois difficilement manipulables et qui risquent de se desserrer ; des vis de fixation du type "harpon" qui, en raison de leur dilatation thermique, ne permettent pas un blocage satisfaisant des bagues dans le compartiment moteur d'un véhicule automobile ; et des agrafes en tôle qui sont montées à force, souvent au marteau, sur les bagues pour les bloquer dans les échancrures des pièces support et qui sont susceptibles d'être mal montées, voire oubliées et qui ne sont utilisables que si les échancrures des pièces support sont relativement accessibles.

L'invention a pour objet un dispositif de fixation rapide d'une bague dans une échancrure d'une pièce support, qui ne présente pas les inconvénients des moyens connus et qui offre de nombreux avantages par rapport à ces moyens connus en termes de coût, de fiabilité et de facilité d'utilisation.

Elle propose à cet effet, un dispositif de fixation rapide d'une bague dans une échancrure d'une pièce support, l'échancrure étant sensiblement en U et ayant un bord engagé dans une gorge, rainure ou analogue de la surface extérieure de ladite bague, le dispositif comprenant des moyens de blocage de la bague dans l'échancrure, caractérisé en ce que les moyens de blocage comprennent une agrafe sensiblement en U, accrochée sur la pièce support autour de l'échancrure et comportant du côté de l'ouverture de l'échancrure des doigts ou des pattes orientés sensiblement radialement vers l'axe de la bague pour s'appliquer sur la surface extérieure de celle-ci en formant des arcs-boutants qui permettent l'introduction de la bague dans l'échancrure dans une direction sensiblement perpendiculaire à l'axe et qui s'opposent à l'extraction de la bague hors de l'échancrure dans cette direction.

Dans ce dispositif, l'agrafe peut être montée au préalable sur la pièce support de façon imperdable, de sorte qu'il suffit ensuite d'engager la bague dans l'ouverture de l'échancrure et de la pousser vers le fond de l'échancrure, les doigts ou pattes de l'agrafe s'écartant par déformation élastique au passage de la bague, puis venant s'appliquer sur sa surface extérieure en s'opposant à son extraction hors de l'échancrure.

Ce dispositif est très peu coûteux, simple et rapide à utiliser, imperdable et très fiable.

De plus, il peut supporter des efforts radiaux très importants.

Selon d'autres caractéristiques de l'invention :
- l'agrafe est réalisée en fil métallique, en particulier en fil d'acier, ou en tôle mince,
- elle est fixée par clipsage ou encliquetage sur la pièce support,
- les doigts précités sont formés par les extrémités libres de l'agrafe,
- deux fentes ou découpes sont formées dans les bords parallèles opposés de l'échancrure pour recevoir des parties repliées de l'agrafe qui s'étendent dans une direction sensiblement perpendiculaire au plan de l'échancrure et qui sont situées au voisinage immédiat des doigts précités.

Le dispositif selon l'invention a l'avantage supplémentaire de ne nécessiter aucun outil pour la fixation de l'agrafe et de la bague dans l'échancrure de la pièce support.

Avantageusement, l'agrafe comporte des coudes ou ondulations sensiblement perpendiculaires au plan de l'échancrure, permettant de rattraper le jeu axial de la bague dans l'échancrure.

Eventuellement, l'agrafe peut également comporter des coudes ou ondulations sensiblement perpendiculaires à l'axe de la bague, permettant de rattraper le jeu radial de la bague dans l'échancrure.

Cette invention est applicable non seulement à la fixation rapide des bagues d'arrêt de gaine dans l'industrie automobile et dans les autres domaines techniques, mais aussi de façon générale à la fixation rapide de toute pièce cylindrique ou tubulaire dans une échancrure d'une autre pièce.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'une agrafe selon l'invention, accrochée sur une pièce support autour d'une échancrure de celle-ci ;
- la figure 2 est une vue en perspective semblable à la figure 1, mais représentant l'autre face de la pièce support ;
- la figure 3 est une vue de côté de l'agrafe ;
- la figure 4 est une vue schématique en perspective d'une bague montée dans l'échancrure de la pièce support au moyen du dispositif selon l'invention ;
- la figure 5 est une vue schématique en perspective d'une variante de réalisation de l'invention.

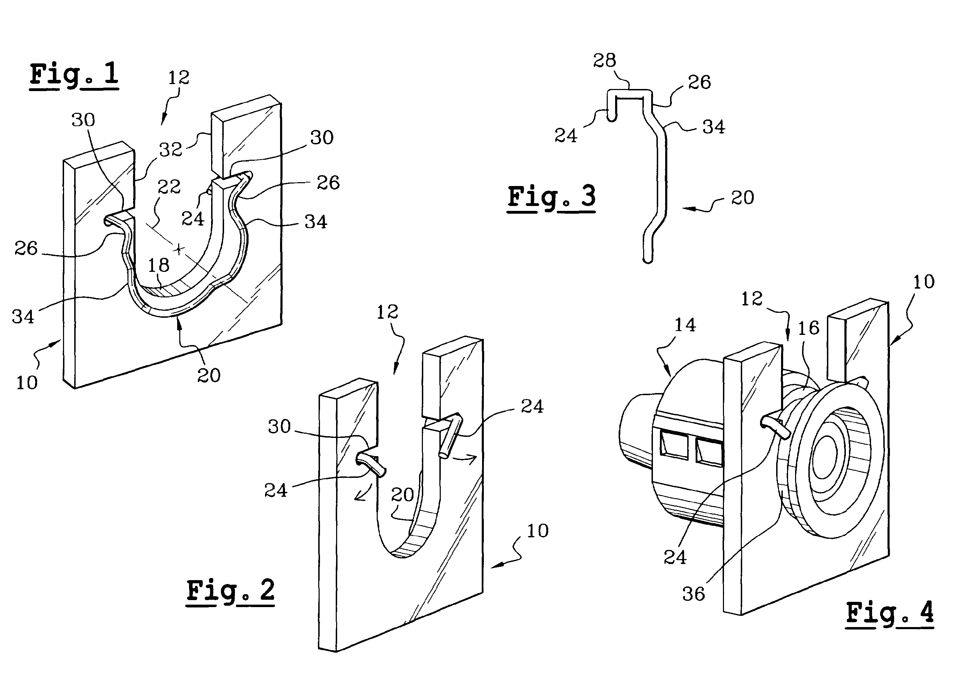

Dans les figures 1 à 4, la référence 10 désigne une pièce support comportant une échancrure 12 sensiblement en forme de U, destinée à recevoir une bague cylindrique 14 (figure 4) dont la surface extérieure est formée avec une gorge 16, rainure ou analogue dans laquelle s'engage le bord 18 de l'échancrure 12 pour retenir axialement la bague 14 sur la pièce support 10.

Le dispositif selon l'invention comprend essentiellement une agrafe 20, réalisée en fil métallique, en particulier en fil d'acier, et ayant sensiblement la forme d'un U avec des dimensions correspondant à celles de l'échancrure 12 pour entourer celle-ci quand elle est accrochée sur la plaque support 10.

Les extrémités de l'agrafe 20 sont pliées ou coudées pour former des U qui s'étendent dans des plans sensiblement radiaux par rapport à l'axe 22 de l'échancrure, les U étant ouverts en direction de l'axe et comprenant deux branches parallèles 24, 26 réunies par une branche perpendiculaire 28, la branche radiale 24 formant une extrémité libre de l'agrafe 20 et s'étendant en direction de l'axe 22.

Deux fentes 30 sont formées dans les parties droites opposées 32 du bord 18 de l'échancrure, pour recevoir les branches 28 des extrémités en U de l'agrafe. Dans l'exemple représenté, les fentes 30 sont perpendiculaires aux parties droites 32 du bord de l'échancrure mais elles pourraient également s'étendre en oblique. Les fonds des fentes 30 sont séparés l'un de l'autre par une distance qui correspond sensiblement à la distance entre les branches 28 des extrémités en U de l'agrafe à l'état libre.

Les branches 26 de ces extrémités en U sont reliées à des ondulations, des coudes ou analogues 34 qui s'étendent perpendiculairement au plan de l'échancrure, dans une direction parallèle à l'axe 22 et dans le sens opposé aux branches 28 précitées. L'amplitude des ondulations 34 dans la direction de l'axe 22 est légèrement supérieure au jeu axial de la bague 14 par rapport à la plaque support 10, comme on le verra dans ce qui suit.

Eventuellement, la partie sensiblement semi-circulaire de l'agrafe 20 qui s'étend entre ses extrémités en U peut comporter des ondulations dans un plan perpendiculaire à l'axe 22, pour compenser un jeu radial de la bague 14 dans l'échancrure 12.

Le montage du dispositif selon l'invention est extrêmement simple :

On commence par poser l'agrafe sur la pièce support 10, en rapprochant l'une de l'autre ses deux extrémités en U pour les introduire dans l'ouverture de l'échancrure 12, dans une direction sensiblement perpendiculaire à l'axe 22. On amène les branches 28 au niveau des fentes 30 et on relâche l'agrafe, qui retrouve par élasticité sa forme initiale, les branches 28 de ses extrémités venant alors au fond des fentes 30. L'agrafe 20 est ainsi accrochée sur la pièce support 10 de façon imperdable.

Ensuite, au moment de l'assemblage de la bague 14 sur la pièce support 10, il suffit de présenter cette bague en positionnant sa gorge 16 au niveau de l'échancrure 12 et de la déplacer en translation vers le fond de l'échancrure, dans une direction perpendiculaire à l'axe 22. Le diamètre du fond de la gorge 16 correspond, à des tolérances de fabrication près, au diamètre interne de la partie arrondie de l'échancrure 12 tandis que la largeur ou dimension axiale de la gorge 16 est légèrement supérieure à l'épaisseur axiale de la pièce support 10 au niveau de l'échancrure 12.

Au cours du déplacement de la bague 14 vers le fond de l'échancrure 12, sa partie périphérique 36 raccordée à la gorge 16 du côté des extrémités libres 24 de l'agrafe, vient s'appuyer sur celles-ci et les déforme élastiquement vers l'extérieur, dans le sens indiqué par les flèches en figure 2, après quoi les extrémités libres 24 retrouvent leur position initiale sensiblement radiale quand la gorge 16 de la bague est au fond de l'échancrure, et viennent s'appuyer sensiblement radialement sur la surface périphérique 36 de la bague. Dans cette position, l'extraction de la bague 14 hors de l'échancrure est quasi-impossible, les extrémités libres 24 de l'agrafe jouant le rôle d'arc-boutant et leur déplacement vers l'extérieur étant interdit par les branches 28 en appui sur les fonds des fentes 30.

L'agrafe 20 est par exemple réalisée en fil d'acier d'un diamètre de 1,5 millimètre, l'agrafe ayant un rayon intérieur de 26 millimètres environ. Les extrémités libres 24 de l'agrafe sont à 110-120 degrés environ l'une de l'autre et la partie cylindrique 36 de la bague destinée à coopérer avec ces extrémités libres a un diamètre de 26 millimètres environ. Dans ces conditions, l'effort de montage qu'il faut appliquer à la bague 14 pour la faire passer entre les extrémités libres 24 de l'agrafe est de l'ordre de 25 N, tandis que l'effort à appliquer à cette bague pour l'extraire de l'échancrure est supérieur à 500 N.

L'amplitude des ondulations ou coudes 34 parallèlement à l'axe 22 est de quelques millimètres (par exemple 3 à 4 millimètres), les sommets de ces ondulations venant s'appliquer sur une paroi radiale de la gorge 16 ou sur un épaulement de la surface périphérique de la bague 14, tandis que leurs bases sont en appui sur la pièce support 10, sur le pourtour de l'échancrure 12.

La bague 14 est ainsi montée sans jeu axial sur la plaque support 10. Elle peut également être maintenue radialement entre les bases des ondulations formées par l'agrafe 20 dans un plan perpendiculaire à l'axe 22.

Le dispositif selon l'invention est très peu coûteux, le prix de l'agrafe 20 étant presque négligeable. Le montage de la bague 14 dans l'échancrure 12 peut se faire à l'aveuglette, l'opérateur n'ayant qu'à pousser la bague 14 à l'intérieur de l'échancrure perpendiculairement à l'axe 22 jusqu'à entendre le déclic qui se produit quand les extrémités libres 24 de l'agrafe échappent à la surface périphérique 36 de la bague et viennent en position d'arc-boutant sur celle-ci.

Comme déjà indiqué, la bague 14 peut être fixée par tout moyen approprié sur la gaine d'un câble coulissant utilisé pour la commande d'un organe quelconque et notamment pour la commande des vitesses dans un véhicule automobile. L'invention est également applicable à la fixation rapide de pièces cylindriques d'un type quelconque dans des échancrures d'autres pièces.

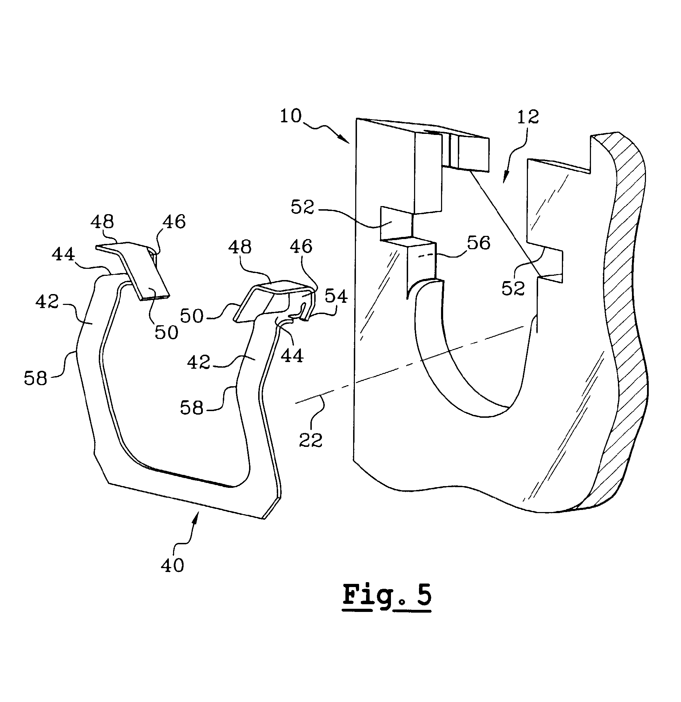

La variante de réalisation de la figure 5 diffère du mode de réalisation des figures 1 à 4 en ce que l'agrafe 40 est réalisée en tôle mince, ayant par exemple une épaisseur de l'ordre de 0,4 mm, de préférence en acier à ressort. Les branches 42 de la partie en U de l'agrafe 40 ont une largeur de quelques millimètres (4 à 5 mm dans l'exemple représenté) et sont dans un plan sensiblement perpendiculaire à l'axe 22 de l'échancrure 12. Les extrémités libres des branches 42 sont pliées en U, une première fois parallèlement à l'axe 22, une deuxième fois parallèlement à leur direction initiale, et une troisième fois parallèlement à l'axe 22, mais dans le sens opposé, en formant des bandes 44, 46, 48 respectivement qui sont les branches des U. Les branches 48 sont prolongées par des pattes 50 qui s'étendent radialement vers un point milieu de l'agrafe, comme les doigts 24 du mode de réalisation précédent.

Les bords droits 32 de l'échancrure 12 sont formés avec des découpes ou échancrures rectangulaires 52 destinées à recevoir les parties en U 44, 46, 48 de l'agrafe qui sont engagées dans ces découpes ou échancrures 52 par translation parallèlement à l'axe 22. Des doigts 54 formés par découpe des bords extérieurs des branches médianes 46 des parties en U constituent des moyens de fixation de l'agrafe 40 par encliquetage élastique sur la pièce support 10, ces doigts 54 se déformant élastiquement au montage des parties en U et s'accrochant ensuite sur la face 56 de la pièce 10 opposée à celle visible en figure 5.

Comme dans le mode de réalisation de la figure 1, des coudes 58 des branches 42 de l'agrafe permettent de rattraper le jeu axial de la bague 14 dans l'échancrure 12.

Pour sa fixation sur la pièce 10, la bague 14 est introduite dans l'échancrure 12 dans une direction perpendiculaire à l'axe 22, comme déjà décrit, en repoussant élastiquement vers l'extérieur les pattes 50, dont les extrémités viennent ensuite s'appliquer sur la bague et la retiennent dans l'échancrure.

## Revendications

1. Dispositif de fixation rapide d'une bague (14) sur une pièce support (10) comprenant une échancrure (12) dont le bord (18, 32) est engagé dans une gorge, rainure ou analogue (16) de la surface extérieure de ladite bague, le dispositif comprenant des moyens de blocage de la bague (14) dans l'échancrure (12), caractérisé en ce que les moyens de blocage comprennent une agrafe (20, 40) sensiblement en U, accrochée sur la pièce support (10) autour de l'échancrure (12) et comportant, du côté de l'ouverture de l'échancrure, des doigts ou des pattes (24, 50) orientés sensiblement radialement vers l'axe (22) de l'échancrure, pour s'appliquer sur la surface extérieure (36) de la bague en formant des arcs-boutants qui permettent l'introduction de la bague dans l'échancrure dans une direction sensiblement perpendiculaire à l'axe (22) et s'opposent à l'extraction de la bague hors de l'échancrure dans cette direction.

2. Dispositif selon la revendication 1, caractérisé en ce que les parties d'extrémité de l'agrafe (20) sont pliées ou coudées pour former des U s'étendant dans des plans sensiblement radiaux par rapport à l'axe (22) de l'échancrure, ces U étant ouverts en direction de l'axe.

3. Dispositif selon la revendication 1, caractérisé en ce que les parties d'extrémité de l'agrafe (40) sont pliées pour former des U (44, 46, 48) dans des plans sensiblement parallèles à l'axe (22).

4. Dispositif selon la revendication 2 ou 3, caractérisé en ce que les parties coudées en U de l'agrafe (20, 40) forment des moyens d'accrochage sur la pièce support.

5. Dispositif selon l'une des revendications 1 à 3, caractérisé en ce que les doigts ou pattes (24, 50) précités sont formés par les extrémités libres de l'agrafe.

6. Dispositif selon l'une des revendications précédentes, caractérisé en ce que l'agrafe est fixée par clipsage ou encliquetage élastique de façon imperdable sur la pièce support (10).

7. Dispositif selon l'une des revendications précédentes, caractérisé en ce que deux fentes (30) sont formées dans des parties parallèles (32) du bord (18) de l'échancrure pour recevoir des parties (28) de l'agrafe qui s'étendent dans une direction sensiblement perpendiculaire au plan de l'échancrure et qui sont raccordées directement aux doigts (24) précités.

8. Dispositif selon l'une des revendications 1 à 6, caractérisé en ce que deux découpes ou échancrures (52) sont formées dans des parties droites du bord de l'échancrure (12) pour recevoir les parties en U (44, 46, 48) de l'agrafe (40).

9. Dispositif selon l'une des revendications précédentes, caractérisé en ce que l'agrafe (20, 40) comporte des coudes ou ondulations (34, 58) sensiblement perpendiculaires au plan de l'échancrure pour rattraper le jeu axial de la bague (14) sur la pièce support (10).

10. Dispositif selon l'une des revendications 1 à 7, caractérisé en ce que l'agrafe (20) comporte des coudes ou ondulations dans un plan sensiblement perpendiculaire à l'axe de la bague, pour rattraper le jeu radial de la bague dans l'échancrure (12) de la pièce support.

11. Dispositif selon l'une des revendications 1 à 7, caractérisé en ce que l'agrafe (20) est réalisée en fil métallique, en particulier en fil d'acier.

12. Dispositif selon l'une des revendications 1, 3 à 6, 8, 9, caractérisé en ce que l'agrafe (40) est réalisée en tôle mince, notamment d'acier à ressort.

13. Dispositif selon l'une des revendications précédentes, caractérisé en ce que la bague (14) est solidaire de la gaine d'un câble coulissant.
